# EUROPEAN PATENT APPLICATION

(11) **EP 2 048 911 A1**
(43) Date of publication of application: **15.04.2009**
(21) Application number: 08017668.8
(22) Date of filing: 08.10.2008
(51) Int. Cl.: H04W 72/12

(54) **Radio communication system, radio communication method and base station for controlling the transmission interval of a relative grant**

(30) Priority: 09.10.2007 JP 2007263534
(71) Applicant: NTT DoCoMo, Inc., Chiyoda-ku Tokyo 100-6150 (JP)
(72) Inventor: Goto, Yoshikazu, Tokyo 100-6150 (JP); Hanaki, Akihito, Tokyo 100-6150 (JP); Hayashi, Takahiro, Tokyo 100-6150 (JP); Kawamoto, Junichiro, Tokyo 100-6150 (JP); Takagi, Yukiko, Tokyo 100-6150 (JP)
(74) Representative: HOFFMANN EITLE

(57) **Abstract**

A radio communication system includes: a serving cell (for example, cell A functional unit 120) configured to transmit, to a radio terminal 10, an AG for directly specifying an uplink user data transmission rate and an RG for relatively specifying the uplink user data transmission rate; and a non-serving cell (for example, cell B functional unit 130) configured to transmit the relative grant to the radio terminal 10 without transmitting the absolute grant. The non-serving cell includes an RG controlling unit 133 configured to control a transmission interval of an RG for instructing a decrease of the uplink user data transmission rate.

## Description

### CROSS REFERENCE TO RELATED APPLICATION

This application is based upon and claims the benefit of priority from prior Japanese Patent Application No. 2007-263534, filed on October 9, 2007; the entire contents of which are incorporated herein by reference.

### BACKGROUND OF THE INVENTION

### 1. Field of the Invention

The present invention relates to a radio communication system, a radio communication method, and a base station, which include a serving cell transmitting an absolute grant and a relative grant to a radio terminal, and a non-serving cell transmitting the relative grant to the radio terminal without transmitting the absolute grant.

### 2. Description of the Related Art

Heretofore, a radio communication system including a base station and a radio network controlling unit has been known. In the radio communication system, the base station has a single or multiple cells, and a radio communication is performed between each of the cells and a plurality of radio terminals. The radio network controlling unit controls a plurality of base stations, and assigns radio resources to the plurality of radio terminals. Note that such a technique (hereinafter referred to as first technique) is sometimes referred to as R99 (Release 99) or the like.

For the purpose of improving the throughput and shortening the delay time, and the like, there has recently been proposed a technique in which a base station assigns the radio resources to uplink user data transmitted from each of the radio terminals to the base station (network side). Note that such a technique (hereinafter referred to as a second technique) is sometimes referred to as the high speed uplink packet access (HSUPA), the enhanced uplink (EUL) or the like.

Each of the cells functions as a serving cell or as a non-serving cell. A transport block size (TBS) is determined based on the transmission rate (for example, a scheduling grant (SG)) of the uplink user data, and is controlled by transmission rate control data transmitted from the serving cell and the non-serving cell. The transmission rate control data includes an absolute grant (AG) for controlling an absolute value of the transmission rate, and a relative grant (RG) for controlling a relative value of the transmission rate (for example, see 3GPP TS25.321 Ver. 7.5.0).

Here, the uplink user data is transmitted to the base station from the radio terminals via an enhanced dedicated physical data channel (E-DPDCH). The absolute grant (AG) is transmitted from the radio base station to the radio terminals via an E-DCH absolute grant channel (E-AGCH). The relative grant (RG) is transmitted from the radio base station to the radio terminals via an E-DCH relative grant channel (E-RGCH).

The serving cell transmits the absolute grant (AG) and the relative grant (RG) to the radio terminals. Meanwhile, the non-serving cell transmits, to the radio terminals, only the relative grant (RG) without transmitting the absolute grant (AG).

### SUMMARY OF THE INVENTION

In the radio communication system, a state where a radio terminal is connected to multiple cells (i.e., a handover state) can be considered.

In the above-described first technique, in the handover state, each of the cells reports, to the radio network controlling unit, whether or not the cell has successfully received uplink user data transmitted from the radio terminal, The radio network controlling unit instructs the radio terminal to decrease the transmission power of the uplink user data when any of the cells successfully receives the uplink user data. When all of the cells cannot receive the uplink user data from the radio terminal, the radio network controlling unit instructs the radio terminal to increase the transmission power of the uplink user data. Thus, the increase of the transmission power of the uplink user data is suppressed, whereby interference power in each of the cells is suppressed.

On the other hand, the suppression of the interference power in each of the cells is also important for the above-described second technique. However, in the second technique, it is not effective to perform the transmission power control at the radio network controlling unit. Specifically, in the second technique, a base station assigns the radio resources to shorten a delay time. Accordingly, the transmission power control at the radio network controlling unit causes an increase of the delay time. Therefore, in the second technique, the radio network controlling unit does not perform the transmission power control.

Further, in the second technique, the non-serving cell can decrease the interference power caused thereto by transmitting RG (decrease command) to the radio terminal using other ceN as a serving cell.

However, a transmission rate (SG) assigned to the radio terminal using other cell as a serving cell may be excessively decreased by the RG (decrease command) transmitted from the non-serving cell. In addition, the transmission rate (SG) assigned to the radio terminal may be increased again by AG or RG (increase command) transmitted from the serving cell, when the transmission rate (SG) is excessively decreased.

Furthermore, a received total wideband power (RTWP) in the serving cell may be frequently fluctuated in a vicinity of a target RTWP resulting from the frequent fluctuations of the transmission rate (SG).

### SUMMARY OF THE INVENTION

One aspect of the present invention is summarized as a radio communication system, including: a serving cell configured to transmit, to a radio terminal, an absolute transmission rate control data for directly specifying an uplink user data transmission rate and a relative transmission rate control data for relatively specifying the uplink user data transmission rate; and a non-serving cell configured to transmit the relative grant to the radio terminal without transmitting the absolute grant. The non-serving cell includes a controlling unit (RG controlling unit 133) configured to control a transmission interval of a relative transmission rate control data for instructing a decrease of the uplink user data transmission rate.

According to this aspect, the RG controlling unit 133 regulates the transmission interval of the relative transmission rate control data (decrease command). Accordingly, it is possible to prevent the frequent fluctuations of the uplink user data due to the continuous transmission of the relative transmission rate control data (decrease command). Note that, it is needles to say the interference power caused to the non-serving cell is suppressed by the transmission of the relative transmission rate control data (decrease command).

In the above-described aspect, the non-serving cell includes a guard counter (guard counter provided in the counter 132) configured to measure an elapsed time indicating a time elapsed since a transmission of the relative transmission rate control data for instructing the decrease of the uplink user data transmission rate. The controlling unit regulates the transmission of the relative transmission rate control data for instructing the decrease of the uplink user data transmission rate until the elapsed time reaches a predetermined non-transmission time (guard threshold).

In the above-described aspect, the controlling unit controls the transmission interval in accordance with a priority class assigned to uplink user data.

In the above-described aspect, the controlling unit controls the transmission interval for uplink user data having a first priority class to be longer than the transmission interval for uplink user data having a second priority class whose priority is lower than the first priority class.

In the above-described aspect, the non-serving cell includes a trigger counter (trigger counter provided in the counter 132) configured to measure a continuous time for a state in which a reception power in the non-serving cell satisfies a predetermined condition. The controlling unit suspends the transmission of the relative transmission rate control data for instructing the decrease of the uplink user data transmission rate until the continuous time reaches a predetermined suspended time (trigger threshold).

In the above-described aspect, the predetermined condition indicates that a reception power of data received from the radio terminal using an other cell as the serving cell is equal to or larger than a predetermined interference power.

In the above-described aspect, the predetermined condition indicates that a difference between a received total wideband power in the non-serving cell and a target reception power is within a predetermined range.

An aspect of the present invention is summarized as a radio communication method including a serving cell configured to transmit, to a radio terminal, an absolute transmission rate control data for directly specifying an uplink user data transmission rate and a relative transmission rate control data for relatively specifying the uplink user data transmission rate; and a non-serving cell configured to transmit the relative transmission rate control data to the radio terminal without transmitting the absolute transmission rate control data. The non-serving cell controls a transmission interval of the relative transmission rate control data for instructing a decrease of the uplink user data transmission rate.

An aspect of the present invention is summarized as a base station provided in a radio communication system including: a serving cell configured to transmit, to a radio terminal, an absolute transmission rate control data for directly specifying an uplink user data transmission rate and a relative transmission rate control data for relatively specifying the uplink user data transmission rate; and a non-serving cell configured to transmit the relative transmission rate control data to the radio terminal without transmitting the absolute transmission rate control data. The base station includes the non-serving cell including a controlling unit configured to control a transmission interval of the relative transmission rate control data for instructing a decrease of the uplink user data transmission rate,

### BRIEF DESCRIPTION OF THE DRAWINGS

Fig. 1 is a view showing a radio communication system according to a first embodiment;
Fig. 2 is a block diagram showing a base station 100 according to the first embodiment;
Fig. 3 is a block diagram showing a cell functioning as a non-serving cell according to the first embodiment;
Fig. 4 is a view for describing a reception power according to the first embodiment;
Fig. 5 is a block diagram showing a cell functioning as a serving cell according to the first embodiment;
Fig. 6 is a flowchart showing operations of the cell functioning as a non-serving cell according to the first embodiment;
Fig. 7 is a block diagram showing a cell functioning as a non-serving cell according to a second embodiment;
Fig. 8 is a view showing one example of an RG transmission target priority table according to the second embodiment;
Fig. 9 is a flowchart showing operations of the cell functioning as a non-serving cell according to the second embodiment; and
Fig. 10 is a view showing a radio communication system according to a third embodiment.

### DESCRIPTION OF THE EMBODIMENTS

With reference to the accompanying drawings, a radio communication system according to an embodiment of the present invention will be described below. Note that, in the following description of the drawings, the same or similar parts will be denoted by the same or similar reference numerals.

However, it should be noted that the drawings are schematic and ratios of dimensions and the like are different from actual ones. Therefore, specific dimensions and the like should be determined by taking into consideration the following description. Moreover, as a matter of course, also among the drawings, there are included portions in which dimensional relationships and ratios are different from each other.

### [First Embodiment]

### (Configuration of Radio Communication System)

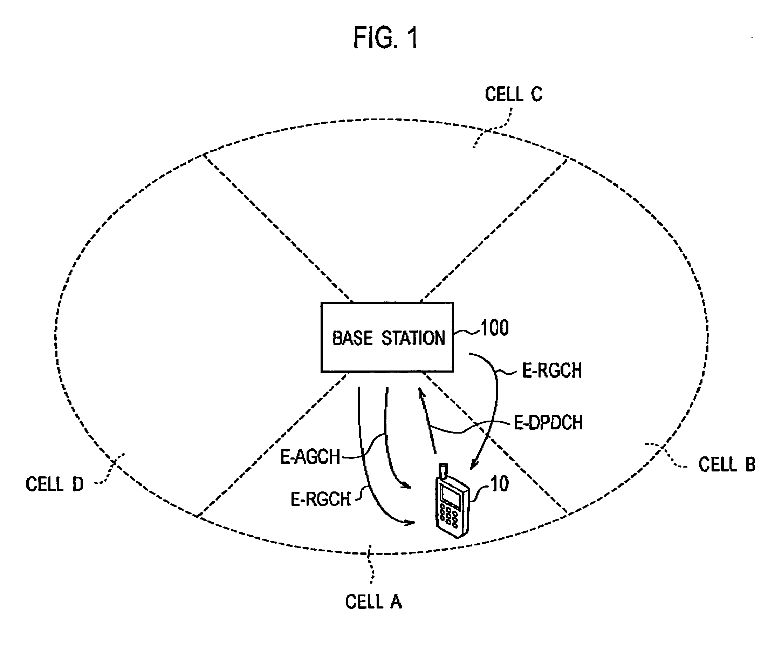

With reference to the accompanying drawings, a configuration of a radio communication system according to a first embodiment will be described below. Fig. 1 is a view showing the radio communication system according to the first embodiment. As shown in Fig. 1, the radio communication system includes a radio terminal 10 and a base station 100.

The radio terminal 10 transmits uplink user data to the base station 100. Specifically, the radio terminal 10 transmits the uplink user data to the base station 100 via a dedicated physical data channel (DPDCH) in a framework in which the radio network controlling unit assigns radio resources and the like. Note that such framework is sometimes referred to as R99 (Release 99) or the like.

In this framework, the radio terminal 10 transmits uplink control data to the base station 100 via a dedicated physical control channel (DPCCH).

Meanwhile, the radio terminal 10 transmits the uplink user data to the base station 100a via an enhanced dedicated physical data channel (E-DPDCH), in a framework in which the base station 100 assigns radio resources and the like. Note that this framework is sometimes referred to as the high speed uplink packet access (HSUPA), the enhanced uplink (EUL) or the like.

Here, the uplink user data is divided into blocks for each transmission time interval (TTI), that is, for each process (HARQ process). Each of the blocks (MAC-e PDU) is transmitted by use of a process (hereinafter referred to as an active process) assigned to the radio terminal 10.

Moreover, one cycle (HARQ RTT) is configured of a predetermined number of processes (process #1 to process #n) and each of the cycle is repeated. Note that the number of processes included in one cycle is set according to a TTI length. For example, when the TTI length is 2 ms, the number of processes included in one cycle is "8". When the TTI length is 10 ms, the number of processes included in one cycle is "4".

Note that, the radio terminal 10 transmits not only the uplink user data via data channel such as DPDCH or E-DPDCH but also transmits the uplink control data via control channels such as the dedicated physical control channel (DPCCH) or the enhanced dedicated physical control channel (E-DPCCH).

The base station 100 controls a plurality of cells (cells A to D), and each of the cells communicates with the radio terminal 10 located in the each of the cells. Each of the cells can function as a serving cell, or a non-serving cell.

Note that the "cell" is basically used as a term representing a function communicating with the radio terminal 10. The "cell" is sometimes used as a term representing an area in which the radio terminal 10 is located.

For example, in Fig. 1, the radio terminal 10 performs a communication according to an instruction from an EUL scheduler provided in the cell A (in other words, the radio terminal performs a communication according to an AG received from the cell A via E-AGCH). In this example, the cell A is a serving cell for the radio terminal 10 and the cells B to D are non-serving cells for the radio terminal 10. Meanwhile, the radio terminal 10 is referred to as a serving terminal for the cell A and as a non-serving terminal for the cells B to D.

Here, the radio terminal 10 has a table associating a transmission power ratio with the transmission rate. This table is used for transmitting the uplink user data via the E-DPDCH. The transmission power ratio is a ratio of a transmission power of the E-DPDCH to a transmission power of the DPCCH (E-DPDCH/DPCCH). The transmission rate is represented by a transport block size (TBS).

The transmission power ratio assigned to the radio terminal 10 will be hereinafter referred to as a scheduling grant (SG). Note that the transmission power ratio and the transmission rate are associated one-to-one with each other. Thus, the scheduling grant (SG) may be considered not only as a term representing the transmission power ratio assigned to the radio terminal 10 but also as a term representing the transmission rate assigned to the radio terminal 10.

The absolute grant (AG) is data (Index) directly specifying the transmission power ratio (E-DPDCH/DPCCH) assigned to the radio terminal 10 (see 3GPP TS25.212 Ver.7.5.0 4.10.1A.1 "Information field mapping of the Absolute Grant Value").

As described above, the absolute grant (AG) is a command directly specifying the transmission rate value without relying on the current transmission rate.

The relative grant (RG) is data ("Up", "Down" and "Hold") relatively specifying the transmission power ratio (E-DPDCH/DPCCH) assigned to the radio terminal 10 (see 3GPP TS25.321 Ver. 7.5.0 9.2.5.2.1 "Relative Grants").

As described above, the relative grant (RG) is a command relatively controlling the current transmission rate. Specifically, the relative grant (RG) includes an increase command "Up" for instructing an increase of the current transmission rate, a retention command "Hold" for instructing a retention of the current transmission rate, and a decrease command "Down" for instructing a decrease of the current transmission rate. Here, the increase command instructs the increase of the transmission rate by a predetermined amount. Further, the decrease command instructs the decrease of the transmission rate by a predetermined amount. The predetermined amount for the increase may be the same as or smaller than the predetermined amount for the decrease.

The radio terminal 10 updates the SG according to the transmission rate control data (AG or RG) received from the base station 100a (see 3GPP TS25.321 Ver. 7.5.0 11.8.1.3 "Scheduling grant Update"). Subsequently, the radio terminal 10 determines a transmission rate (that is, TBS) corresponding to the SG by referring to the table associating the transmission power ratio with the transmission rate (see 3GPP TS25.321 Ver. 7.5.0 11.8.1.4 "E-TFC Selection").

The base station 100 transmits the absolute grant (AG) to the radio terminal 10 via the E-DCH absolute grant channel (E-AGCH). The base station 100 transmits the relative grant (RG) to the radio terminal 10 via the E-DCH relative grant channel (E-RGCH).

For example, the serving cell (here, the cell A) transmits the AG to the radio terminal 10 via the E-AGCH and transmits the RG to the radio terminal 10 via the E-RGCH. Meanwhile, the non-serving cell (here, the cell B) transmits the RG to the radio terminal 10 via the E-RGCH without transmitting the AG to the radio terminal 10 via the E-AGCH.

It should be note that, in Fig. 1, the channels (the DPDCH, the DPCCH and the like) used in the R99 are merely omitted for simplifying the description.

It should also be noted that multiple number of the radio terminals 10 existed in each of the cells are omitted in the description. For example, radio terminals 10 that are serving terminals for the respective cells B to D are located. In other words, the radio terminals 10 that are serving terminals for the respective cells B to D are non-serving terminals for the cell A.

Meanwhile, other radio terminals 10 that are the serving terminals for the cell A may be existed in addition to the radio terminal 10 shown in Fig. 1. In other words, other radio terminals 10 that are the serving terminal for the cell A and that are the non-serving terminals for the cells B to D may be existed in addition to the radio terminal 10 shown in Fig.1.

Further, the cell used as the serving cell by the radio terminal 10 is not limited to one cell but may be more than one cell.

### (Configuration of Base Station)

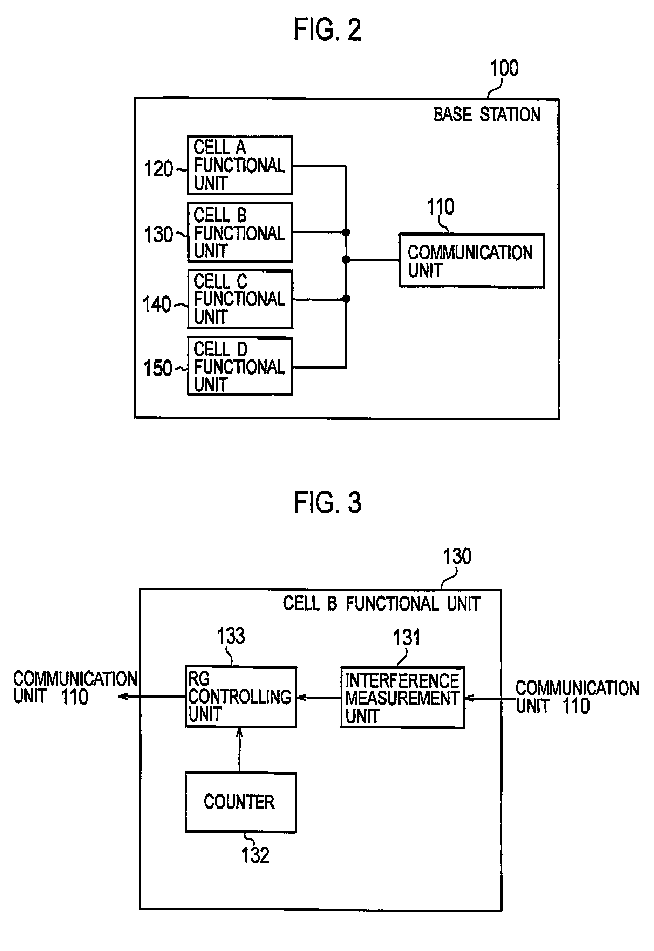

With reference to the accompanying drawings, description will be given of a configuration of the base station according to the first embodiment. Fig. 2 is a block diagram showing the base station 100 according to the first embodiment.

As shown in Fig. 2, the base station 100 includes a communication unit 110, a cell A functional unit 120, a cell B functional unit 130, a cell C functional unit 140 and a cell D functional unit 150.

The communication unit 110 communicates with the plurality of radio terminals 10 located in the cells A to D, respectively. Specifically, the communication unit 110 receives uplink user data from each of the plurality of radio terminals 10 via the data channel such as the DPDCH or the E-DPDCH. Further, the communication unit 110 receives uplink control data from each of the plurality of radio terminals 10 via the control channel such as the DPCCH or the E-DPCCH. Meanwhile, the communication unit 110 transmits the control data (AG or RG) to each of the plurality of radio terminals 10 via the control channel such as the E-AGCH and the E-RGCH.

Note that the communication unit 110 also communicates with upper apparatuses (such as a radio network controlling unit, a switching apparatus or the like), which controls the base station 100.

The cell A functional unit 120 functions as a serving cell for the radio terminals 10 located in the cell A. Meanwhile, the cell A functional unit 120 functions as a non-serving cell for radio terminals 10 located in the cells B to D.

The cell B functional unit 130 functions as a serving cell for radio terminals 10 located in the cell B. Meanwhile, the cell B functional unit 130 functions as a non-serving cell for radio terminals 10 located in the cells A, C and D.

The cell C functional unit 140 functions as a serving cell for radio terminals 10 located in the cell C. Meanwhile, the cell C functional unit 140 functions as a non-serving cell for radio terminals 10 located in the cells A, B and D.

The cell D functional unit 150 functions as a serving cell for radio terminals 10 located in the cell D. Meanwhile, the cell D functional unit 150 functions as a non-serving cell for radio terminals 10 located in the cells A to C.

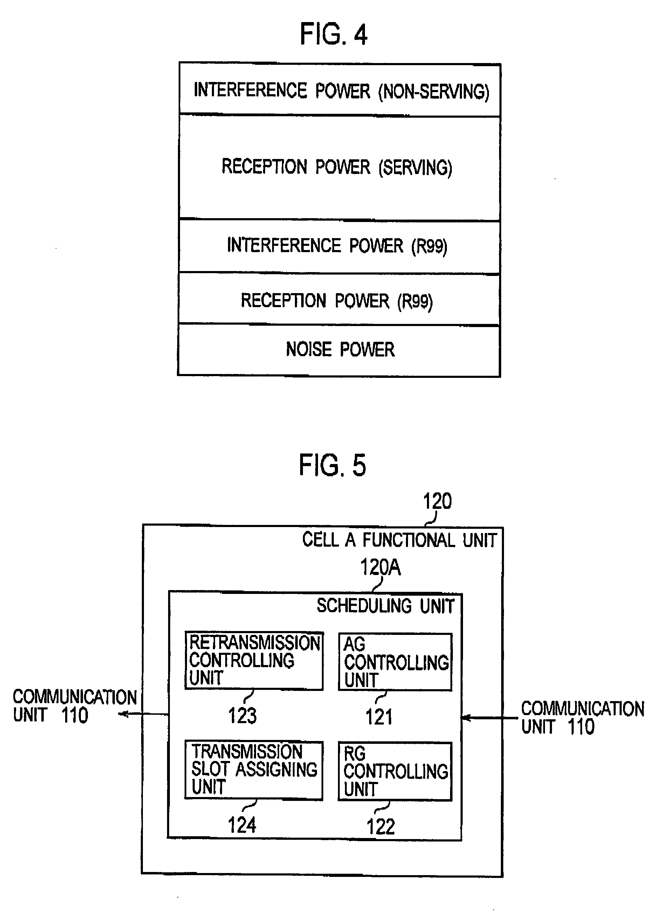

Note that, detailed description of the cell functioning as a non-serving cell will be given later (see, Fig. 3). Similarly, detailed description of the cell functioning as a serving cell will be given later (see, Fig. 5). The first embodiment will be described for an example in which the cell B (cell B functional unit 130) functions as the non-serving cell and the cell A (cell A functional unit 120) functions as the serving cell.

### (Configuration of the Cell Functioning as a Non-Serving Cell)

In the following description, the configuration of the cell functioning as a non-serving cell according to the first embodiment will be described by referring to the accompanying drawings. Fig. 3 is a block diagram showing the cell B (cell B functional unit 130) functioning as a non-serving cell according to the first embodiment. As described above, the cell B functional unit 130 (cell B) functions as a non-serving cell for the radio terminal 10 (that is, the serving radio terminal 10 of the cells A, C, or D) located in the cells A, C, or D.

As shown in Fig. 3, the cell B functional unit 130 functions as the non-serving cell includes an interference measuring unit 131, an instruction unit 132, and a RG controlling unit 133.

The interference measuring unit 131 measures a reception power of various kinds of data received from the radio terminal 10 (serving terminal) using the cell B as the serving cell. Further, the interference measuring unit 131 measures the interference power of various kinds of data received form the radio terminal 10 (non-serving terminal) located in a cell other than the cell B. The cell other than the cell B includes not only the cells A, C, and D but also a cell that is included in a base station adjacent to the base station 100.

Specifically, as shown in Fig. 4, the interference measuring unit 131 measures a noise power, a reception power (R99), an interference power (R99), a reception power (serving), and an interference power (non-serving).

The reception power (R99) indicates the reception power of the uplink user data received from, via the DPDCH, the radio terminal 10 located in the cell B. The interference power (R99) indicates the reception power of the uplink user data received from, via the DPDCH, the radio terminal 10 located in the cell other than the cell B.

The reception power (serving) indicates the reception power of the uplink user data received from, via the E-DPDCH, the radio terminal 10 (serving terminal) located in the cell B. The interference power (non-serving) indicates the reception power of the uplink user data received from, via the E-DPDCH, the radio terminal 10 (non-serving terminal) located in the cell other than the cell B.

The counter 132 includes a guard counter and a trigger counter. The guard counter counts an elapsed time indicating a time elapsed since the RG is transmitted to the radio terminal 10 (non-serving terminal) using a cell other than the cell B as the serving cell. The trigger counter counts a continuous time for a state in which the reception power in the cell B satisfies predetermined conditions.

More specifically, the guard counter counts up the elapsed time for every sub-frame period (2 msec). A count value of the guard counter is reset when the RG is transmitted to the non-serving cell. The count value of the guard counter is carried over between sub-frames. Note that, the guard counter is provided in each cell and counts the elapsed time for each cell.

The trigger counter counts up the continuous time for every sub-frame period (2 msec). A count value of the trigger counter is reset when the reception power in the cell B does not satisfy the predetermined conditions. The count value of the trigger counter is carried over between the sub-frames.

Here, the above-described predetermined conditions are as follows: (1) "RTWP threshold ≥ target RTWP - measured RTWP" and (2) "predetermined interference power ≤ interference power (non-serving)".

The received total wideband power (RTWP) is a sum of the noise power, the reception power (R99), the interference power (R99), the reception power (serving), and the interference power (non-serving). The target RTWP indicates a target RTWP in each cell. The measured RTWP indicates a RTWP measured in each cell. The RTWP threshold indicates a threshold for determining whether or not the measured RTWP is in a vicinity of the target RTWP.

The RG controlling unit 133 controls a transmission interval of RG instructing to decrease the uplink user data received, via the E-DPDCH, from the radio terminal 10 (non-serving) using other cell as a serving cell. Specifically, the RG controlling unit 133 operates in the following manner.

Firstly, the RG controlling unit 133 determines whether or not the reception power in the cell B satisfies the predetermined conditions. To be more specific, the RG controlling unit 133 determines whether or not "RTWP threshold ≥ target RTWP - measured RTWP" is satisfied. Further, the RG controlling unit 133 determines whether or not "predetermined interference power ≤ interference power (non-serving)" is satisfied.

The predetermined interference threshold may be a predetermined fixed value or a value determined by a ratio of the reception power (serving) to the interference power (non-serving).

For example, the predetermined interference threshold, the interference power (non-serving), and the reception power (serving) are respectively expressed by "Th," "1," and "S".

When the predetermined interference threshold "Th" is a fixed value, the RG controlling unit 133 determines whether or not "I" exceeds "Th."

When the predetermined interference threshold "Th" is a value determined by "I/S", the RG controlling unit 133 determines whether or not "I" exceeds "Th × S". On the other hand, when the predetermined interference threshold "Th" is a value determined by "S/I", the RG controlling unit 133 determines whether or not "I" exceeds "S/Th".

When the predetermined interference threshold "Th" is a value determined by "I/(S+I)", the instruction unit 132 determines whether or not "I" exceeds "Th × (S-I)". On the other hand, when the predetermined interference threshold "Th" is a value determined by "(S+I)/I", the RG controlling unit 133 determines whether or not "I" exceeds "(S+I)/Th".

Secondly, the RG controlling unit 133 determines whether or not the count value of the guard counter is smaller than the guard threshold. The guard threshold indicates a threshold for determining the time interval (predetermined non-transmission time) during which the RG should not be continuously transmitted to the radio terminal 10 (non-serving terminal) using other cell as the serving cell.

Thirdly, the RG controlling unit 133 determines whether or not the count value of the trigger counter is smaller than the trigger threshold. The trigger threshold indicates a threshold for determining the time interval (predetermined suspended time) during which the transmission of the RG to the radio terminal 10 (non-serving terminal) using other cell as the serving cell should be suspended, when the predetermined conditions are satisfied.

Fourthly, the RG controlling unit 133 transmits the RG via the E-RGCH to the radio terminal 10 (non-serving terminal) using other cell as the serving cell, when the count value of the guard counter is larger than the guard threshold and the count value of the trigger counter is larger than the trigger threshold. Note that, the RG transmitted here is either a retention command "Hold" or a decrease command "Down". As described above, the decrease command "Down" is a command for instructing the decrease by a predetermined decrease amount. Note that, the RG controlling unit 133 does not transmit the increase command "Up" to the non-serving cell.

### (Configuration of the Cell Functioning as a Serving Cell)

In the following description, the configuration of the cell functioning as the serving cell according to the first embodiment will be described by referring to the accompanying drawings. Fig. 5 is a block diagram showing the cell A (cell A functional unit 120) functioning as the serving cell according to the first embodiment. As described above, the cell A functional unit 120 (cell A) functions as the serving cell for the radio terminal 10 located in the cell A (that is, the radio terminal 10 using the cell A as the serving cell).

As shown in Fig. 5, the cell A functional unit 120 functioning as the serving cell includes a scheduling unit 120a assigning radio resources or the like, to the radio terminal 10 using the cell A as the serving cell.

The scheduling unit 120a includes an AG controlling unit 121, an RG controlling unit 122, a retransmission controlling unit 123 and a transmission slot assigning unit 124. The scheduling unit 120a is operated in a MAC-e (Media Access Control Enhanced) layer.

The AG controlling unit 121 transmits the AG via the E-AGCH to the radio terminal 10. Note that the AG is a command for directly specifying a value of the transmission rate without relying on the current transmission rate.

The RG controlling unit 122 transmits an RG via the E-RGCH to the radio terminal 10 (serving radio terminal of the cell A). Note that the RG includes the increase command "Up" for instructing the increase of the current transmission rate, the retention command "Hold" for instructing the retention of the current transmission rate, and the decrease command "Down" for instructing the decrease of the current transmission rate. As described above, the increase command "Up" instructs the increase of the transmission rate by a predetermined amount and the decrease command "Down instructs the decrease by a predetermined amount. The predetermined amount for the increase may be the same as or smaller than the predetermined amount for the decrease.

The retransmission controlling unit 123 determines, for each block (for each process), whether or not an error is occurred in the uplink user data. Thereafter, the retransmission controlling unit 123 requests the radio terminal 10 to retransmit a block in which an error is occurred (hereinafter referred to as an error block). Here, a retransmission control technique is a HARQ (Hybrid Automatic Repeat Request) technique for combining a block firstly transmitted from the radio terminal 10 (hereinafter referred to as a transmission block) with a block retransmitted from the radio terminal 10 (hereinafter referred to as a retransmission block).

The transmission slot assigning unit 124 assigns, to the radio terminal 10, a transmission slot (that is, a process included in one TTI) to be used for transmitting the uplink user data (block) via the E-DPDCH. Note that the radio terminal 10 transmits the transmission block or the retransmission block to the base station 100 by using the process assigned by the transmission slot assigning unit 124.

### (Operations of the Cell Functioning as a Non-Serving Cell)

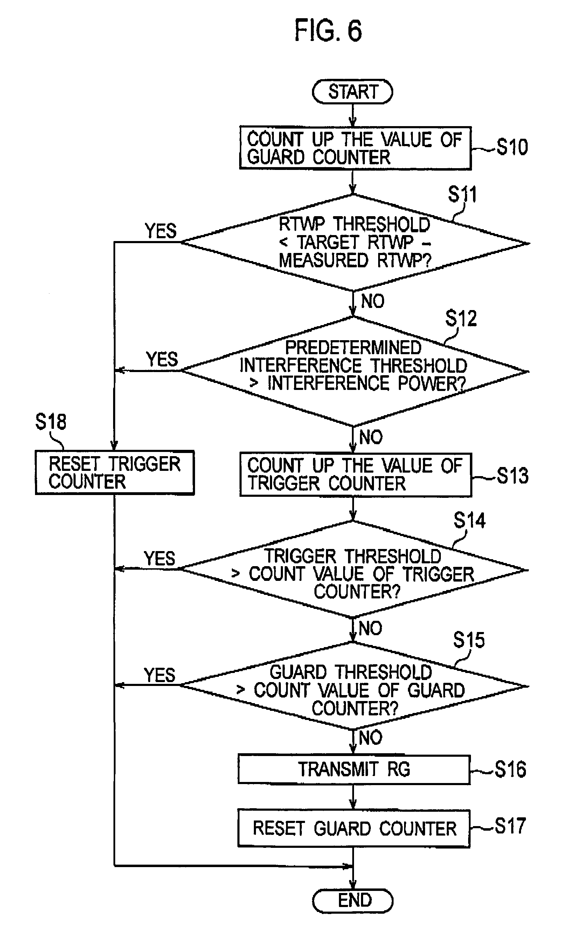

In the following description, operations of the cell functioning as a non-serving cell according to the first embodiment will be described by referring to the accompanying drawing. Fig. 6 is a flowchart showing operations of the cell B (cell B functional unit 130) functioning as the non-serving cell according to the first embodiment. Note that the operations of the cell B shown in Fig. 6 are repeated every sub-frame period (2 msec).

As shown in Fig. 6, in step S10, the cell B functional unit 130 counts up the count value of the guard counter.

In step S11, the cell B functional unit 130 determines whether or not "the target RTWP minus the measured RTWP" is larger than the RTWP threshold. In other words, the cell B functional unit 130 determines whether or not "RTWP threshold ≥ target RTWP - measured RTWP" is satisfied.

The cell B functional unit 130 proceeds to the processing in step S18 when the target RTWP - the measured RTWP is larger than the RTWP threshold, in other words, "RTWP threshold ≥ target RTWP - measured RTWP" is not satisfied. On the other hand, the cell B functional unit 130 proceeds to the processing in step S12 when the target RTWP - the measured RTWP is not larger than the RTWP threshold, in other words, "RTWP threshold ≥ target RTWP - measured RTWP" is satisfied.

In step S12, the cell B functional unit 130 determines whether or not the interference power (non-serving) is smaller than the predetermined interference threshold. In other words, the cell B functional unit 130 determines whether or not "predetermined threshold power ≤ interference power (non-serving)" is satisfied.

The cell B functional unit 130 proceeds to the processing in S18 when the interference power (non-serving) is smaller than the predetermined interference threshold, in other words, "predetermined threshold power ≤ interference power (non-serving)" is not satisfied. On the other hand, the cell B functional unit 130 proceeds to the processing in step S13 when the interference power (non-serving) is not smaller than the predetermined interference threshold, in other words, "predetermined threshold power s interference power (non-serving)" is satisfied.

In step S13, the cell B functional unit 130 counts up the value of the trigger counter.

In step S14, the cell B functional unit 130 determines whether or not the count value of the trigger counter is smaller than the trigger threshold. The cell B functional unit 130 terminates the processings when the value of the trigger counter is smaller than the trigger threshold. On the other hand, the cell B functional unit 130 proceeds to the processing in step S15 when the value of the trigger counter is not smaller than the trigger threshold.

In step S15, the cell B functional unit 130 terminates the processings when the count value of the guard counter is smaller than the guard threshold. On the other hand, the cell B functional unit 130 proceeds to step S16 when the count value of the guard counter is not smaller than the guard threshold.

In step S16, the cell B functional unit 130 transmits the RG via the E-RGCH to the radio terminal 10 (non-serving terminal) using other cell as the serving cell.

In step S17, the cell B functional unit 130 resets the guard counter. In step S18, the cell B functional unit 130 resets the trigger counter.

### (Operations and Effects)

In the first embodiment, the RG controlling unit 133 controls the transmission interval of the RG (decrease command) transmitted to the radio terminal 10 using other cell as the serving cell. This makes it possible to prevent the frequent fluctuations of the uplink user data transmission rate are caused by the RG (decrease command) transmitted from the non-serving cell. Note that, it is needles to say the interference power caused to the non-serving cell is suppressed by the transmission of the RG (decrease command).

More specifically, the RG controlling unit 133 regulates the transmission of the RG, when the count value of the guard counter is smaller than the guard threshold. Accordingly, it is possible to prevent the frequent fluctuations of the uplink user data due to the continuous transmission of the RG.

The RG controlling unit 133 suspends the RG transmission when the count value of the trigger counter is smaller than the trigger threshold. The trigger counter counts the continuous time for a state in which the reception power in the cell B satisfies the predetermined conditions. Specifically, the predetermined conditions are as follows: (1) "RTWP threshold ≥ target RTWP - measured RTWP" and (2)"predetermined interference power ≤ interference power (non-serving)".

In other words, the RG controlling unit 133 suspends the transmission of the RG soon after "RTWP threshold ≥ target RTWP - measured RTWP" is satisfied, until the count value of the trigger counter reaches the trigger threshold or more. Accordingly, the frequent fluctuations of RTWP, which is caused when the measured RTWP is in a vicinity of the target RTWP, can be prevented.

The RG controlling unit 133 regulates the transmission of RG soon after "predetermined interference power ≤ interference power (nornserving)" is satisfied, until the count value of the trigger counter reaches the trigger threshold or more. Accordingly, the frequent RG transmission resulting from the interference power (non-serving) becoming equals to or larger than the predetermined interference power can be suppressed.

### [Second Embodiment]

Next, a second embodiment of the present invention will be described below by referring to the accompanying drawings. In the following description, differences between the first embodiment and the second embodiment will be mainly described.

Thought it is not particularly mentioned in the first embodiment, a cell B functional unit 130 functioning as a non-serving cell controls the transmission interval of the RG to the radio terminal 10 that uses other cell (a cell other than the cell B) as the serving cell, in accordance with a priority class assigned to the uplink user data (radio link).

### (Configuration of the Cell Functioning as a Non-Serving Cell)

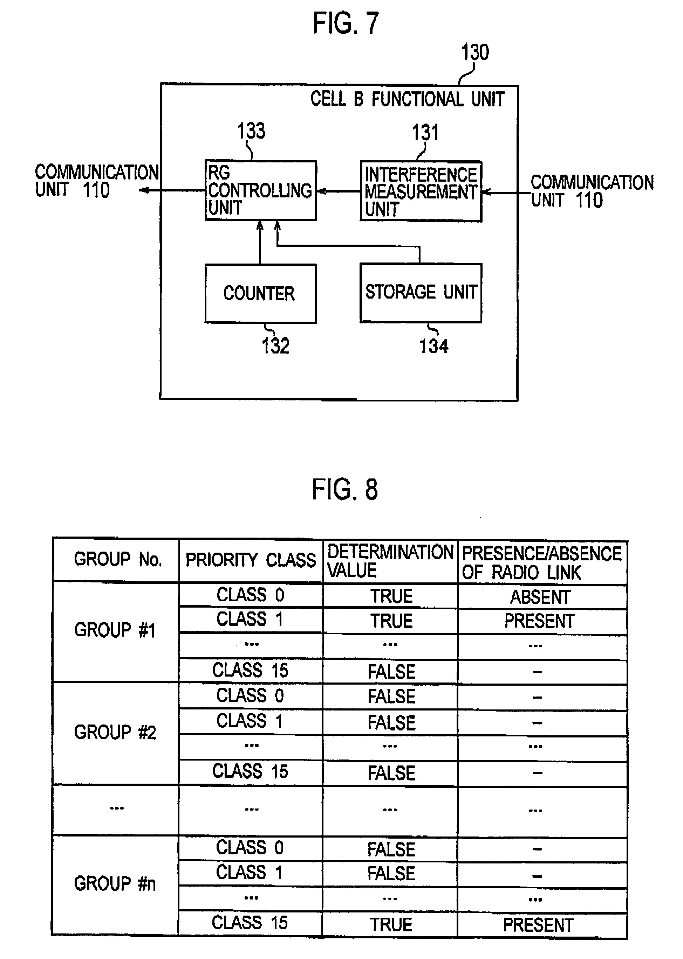

In the following description, the configuration of the cell functioning as the non-serving cell according to the second embodiment will be described by referring to the drawing. Fig. 7 is a block diagram showing the cell B (cell B functional unit 130) functioning as a non-serving cell according to the second embodiment. Note that, in Fig. 7, same reference numerals are given to denote components similar to those of Fig, 3.

As shown in Fig. 7, the cell B functional unit 130 functioning as the non-serving cell includes a storage unit 134 in addition to the configuration shown in Fig. 3.

The storage unit 134 stores an RG transmission target priority table shown in Fig. 8. In the RG transmission target priority table, as shown in Fig. 8, each "Group number" is associated with "priority class", "determination value", and "presence/absence of radio link".

"Group number" indicates the number for identifying a group classified in accordance with the search priority (search order) for searching a target radio link. Here, the target radio link indicates a radio link to which the RG is to be transmitted. As will be described later, the target radio link is searched in each group.

Specifically, the respective radio links are classified into groups #1 to #n. The search order of a group having a smaller group number is higher than the search order of a group having a larger group number.

Note that, the group (target group) searching for the target radio link is selected in the ascending order from the smaller group number, in accordance with the number of the target groups to be searched. Here, the number of the target groups are updated when the number of the RG transmitted to the radio terminal 10 using the same other cell as the serving cell reaches the maximum transmission number (for example, three times).

"Priority class" indicates a priority class assigned to each of the uplink user data (radio links). In the second embodiment, 16 priority classes are existed; priority classes 0 to 15. Here, as the value of the priority class becomes larger, the priority of the uplink user data (radio link) becomes higher.

"Determination value" indicates a value showing whether or not each of the priority classes is included in the group (groups #1 to #n). "True" shows that the priority class is included in the group. "FALSE" shows that the priority class is not included in the group. For example, in Fig. 8, class 0 and class 1 are included in the group #1, and class 15 is not included in the group #1.

Here, the priority class included in each of the groups is determined so that an RG transmission frequency corresponding to the radio link (uplink user data) having a lower priority class would be higher than an RG transmission frequency corresponding to the radio link having a higher priority class. Specifically, the group having a smaller group number includes the radio link having a lower priority class. Further, the group having a larger group number includes the radio link having a higher priority class.

However, it is needless to say that the priority class included in the group can be arbitrarily determined.

"Presence/absence of radio link" shows whether a radio link to which each of the priority Gasses are assigned is present, in the radio link set between the cell B and the radio terminal 10 (non-serving terminal) using the cell B as the non-serving cell. "Absent" shows that the radio link to which the priority class is assigned is absent. "Present" shows that the radio link to which the priority class is assigned is present.

Note that, "priority class" and "determination value" are determined in advance. "Presence/absence of the radio link" is a measured value updated for every TTI period, sub-frame period, or arbitral period.

The RG controlling unit 133 refers to the RG transmission target priority table and searches for the target radio link to which the RG is to be transmitted. Specifically, the RG controlling unit 133 selects the target group in accordance with the number of the target groups to be searched, in the ascending order from a target group having a smaller group number. Subsequently, the RG controlling unit 133 determines to transmit the RG corresponding to the radio link having the priority class included in the target group.

Note that, the RG controlling unit 133 adds "1" to the number of the target groups to be searched, when the number of the RG transmitted to the radio terminal 10 using the same other cell (the cell other than the cell B) as the serving cell reaches the maximum transmission number (for example, three times).

Here, when "1" is added to the number of the target groups, the target group to be searched is selected again, in the ascending order from the target group having a smaller group number. In other words, the group having a smaller group number is more frequently selected as the target group. Accordingly, the RG transmission frequency for the RG corresponding to the radio link having the priority class included in the group having a smaller group number is also high.

In addition, as described above, the group having a smaller group number includes the radio link having a lower priority class, and the group having a larger group number includes the radio link having a higher priority class. Accordingly, the RG transmission frequency corresponding to the radio link having a lower priority class is higher than the RG transmission frequency corresponding to the radio link having a higher priority class.

In this manner, the RG controlling unit 133 controls the transmission interval of the RG (the RG transmission frequency) to the radio terminal 10 using other cell as the serving cell, in accordance with the priority class assigned to each of the uplink user data (radio links).

Specifically, the RG controlling unit 133 controls the transmission interval of the RG so that the transmission interval of the RG corresponding to the radio link having a higher priority class would be longer than the transmission interval of the RG corresponding to the radio link having a lower priority class.

### (Operations of the cell functioning as a non-serving cell)

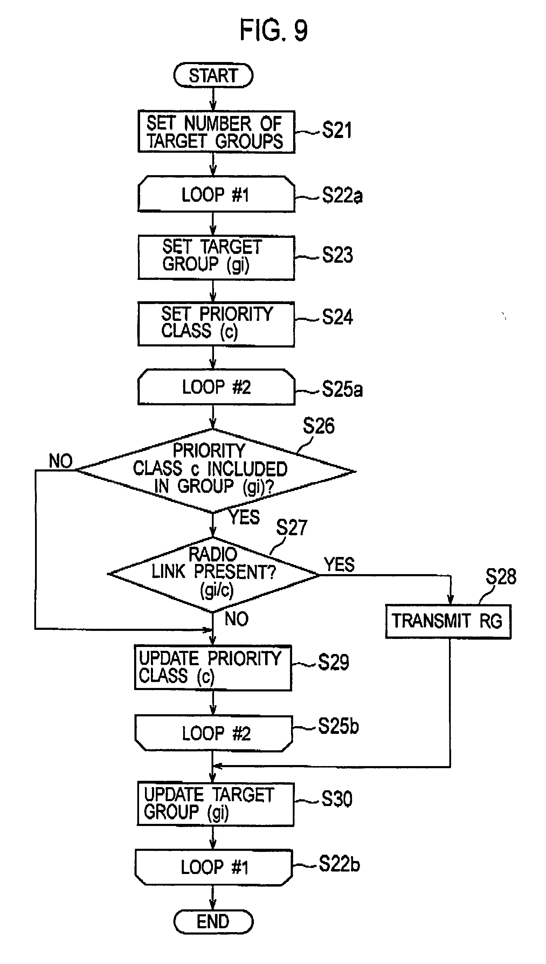

In the following description, operations of the cell functioning as a non-serving cell according to the second embodiment will be described by referring to the drawing. Fig. 9 is a flowchart showing operations of the cell B (cell B functional unit 130) functioning as a non-serving cell according to the second embodiment. Note that, the operations of Fig. 9 are details of the processing in step S16 shown in Fig. 6.

As shown in Fig. 9, in step S21, the cell B functional unit 130 determines the number of the target groups. As described above, "1" is added to the number of the target groups, when the number of the RG transmitted to the radio terminal 10 using the same other cell as the serving cell reaches the maximum transmission number (for example, three times).

In the second embodiment, as described above, the target group is selected in the ascending order from the target group having a smaller group number. For example, when the number of the target groups is "2", the target group includes group #1 and group #2.

In steps S22a and 22b, the cell B functional unit 130 searches, for each target groups, whether the target radio link to which the RG is to be transmitted is present in the RG transmission target priority table, Note that, the target group is selected in accordance with the number of the target groups determined in step S21.

In step S23, the cell B functional unit 130 determines a target group to be searched (gi). For example, an initial value of the target group (gi) is the number of the target group determined in step S21.

In step S24, the cell B functional unit 130 determines a priority class (c) to be searched. For example, an initial value of the priority class (c) is "0".

In steps S25a and 25b, the cell B functional unit 130 searches, in each target groups, whether the target radio link to which the RG is to be transmitted is present in the target group (gi).

In step S26, the cell B functional unit 130 determines whether or not the priority class (c) is included in the target group (gi). Specifically, the cell B functional unit 130 determines whether or not a determination value associated with the priority class (c) in the target group (gi) is "TRUE". When the determination value is "TRUE", the cell B functional unit 130 proceeds to the processing in step S27. On the other hand, when the determination value is "FALSE", the cell B functional unit 130 proceeds to the processing in step S29.

In step S27, the cell B functional unit 130 determines whether or not the radio link having the priority class (c) is present in the target group (gi). The cell B functional unit 130 proceeds to the processing in step S28 when the radio link is present. On the other hand, when the radio link is absent, the cell B functional unit 130 proceeds to the proceeding in step S29.

In step S28, the cell B functional unit 130 transmits the RG to the radio terminal 10 which sets the radio link having the priority class (c) in the target group (gi). Specifically, the cell B functional unit 130 transmits, to the radio terminal 10 using other cell as the serving cell, the RG instructing to decrease the uplink user data corresponding to the radio link.

In step S29, the cell B functional unit 130 updates the priority class (c). For example, the cell B functional unit 130 adds "1" to the priority class (c).

In step S30, the cell B functional unit 130 updates the target group (gi). For example, the cell B functional unit 130 subtracts "1" from the target group (gi).

In this manner, in the loop #1 as shown in Fig. 9, the radio link having the priority class (c) included in the target group (gi) is searched, and the RG is transmitted to the radio terminal 10 to which the radio link having the priority class (c) is set. In addition, as the initial value of the target group (gi), the number of the target groups is set. The number of the groups to be selected as the target group (gi) is increased in the order from group #1, as the number of the target groups increases.

Accordingly, the RG is more likely transmitted to the radio terminal 10 which sets the radio link having the priority class (the priority class with the determination value "TRUE") included in the group having a smaller group number.

### (Operations and Effects)

In the second embodiment, the RG controlling unit 133 controls the transmission interval (transmission frequency) of the RG transmitted to the radio terminal 10 using other cell as the serving cell, in accordance with the priority class assigned to the uplink user data (radio link). Specifically, the transmission interval of the RG corresponding to the radio link having a lower priority class is longer than the transmission interval of the RG corresponding to the radio link having a higher priority class.

Accordingly, the decrease of the transmission rate of the radio link (uplink user data) having a higher priority class is suppressed while suppressing the interference power to the cell B functioning as a non-serving cell.

It should be noted that, in the above-described technical background, the RG transmission frequency from the non-serving cell to the radio terminal is nearly equal among any priority classes assigned to the radio terminal. That is, the RG transmission frequency from the non-serving cell to the radio terminal having a higher priority is nearly equal to the RG transmission frequency from the non-serving cell to the radio terminal having a lower priority.

On the other hand, in the second embodiment, the RG transmission frequency from the non-serving cell is controlled in accordance with the priority class. Accordingly, when compared with the radio terminal having a lower priority class, the frequency that the SG of the radio terminal having a higher priority class is decreased can be lowered.

### [Third Embodiment]

Next, a third embodiment will be described below by referring to the accompanying drawings. In the following description, differences between the first embodiment and the third embodiment will be mainly described.

In the first embodiment, the description has been given for the case where the serving cell and the non-serving cell are controlled by the same base station. On the other hand, in the third embodiment, a description will be given for a case where a serving cell and a non-serving cell are controlled by the different base stations.

### (Configuration of a radio communication system)

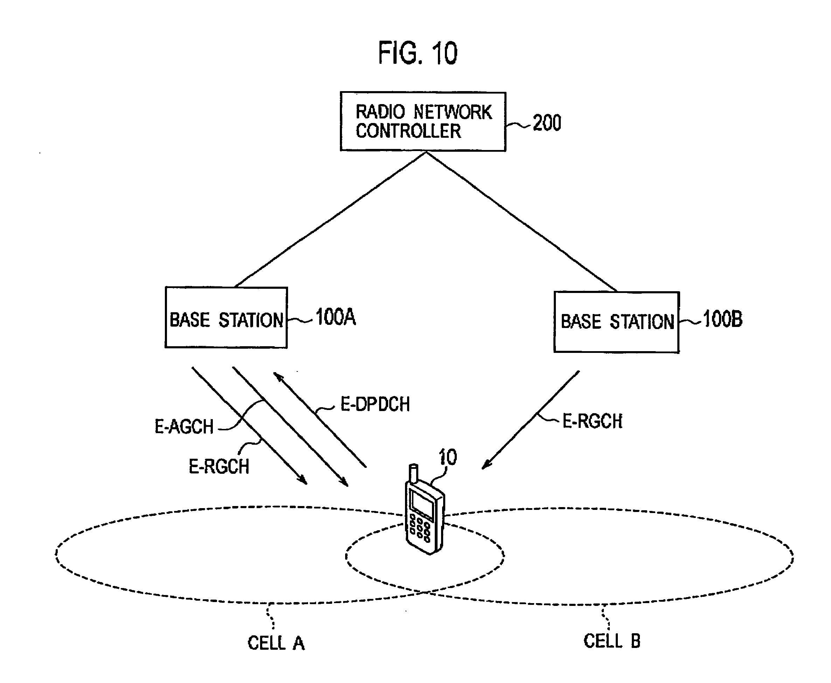

In the following description, the configuration of a radio communication system according to the third embodiment will be described by referring to the accompanying drawings. Fig. 10 is a view showing the radio communication system according to the third embodiment.

As shown in Fig. 10, the radio communication system includes a radio terminal 10, a plurality of radio base stations 140 (base stations 100a and 100b), and a radio network controlling unit 200.

The base station 100a controls a cell A, and the base station 100b controls a cell B. For example, the cell A controlled by the base station 100a is a serving cell of the radio terminal 10. On the other hand, the cell B controlled by the base station 100b is a non-serving cell of the radio terminal 10.

As described above, when the serving cell and the non-serving cell are controlled by the different base station, the RG transmission interval can be controlled by applying the RG transmission interval control as described in the first and second embodiments.

### [Other Embodiments]

The present invention has been described by using the above-described embodiments. However, it should not be construed that the description and the drawings, which constitute one part of this disclosure, are to limit the present invention. Various alternative embodiments, examples, and operational techniques will be obvious for those who are in the art from this disclosure.

For example, in the above-described embodiments, the guard counter is configured to count up the elapsed time. However, it is not limited to the foregoing. More specifically, the guard counter may be configured to count down the elapsed time from a predetermined non-transmission time (guard threshold).

Similarly, in the above-described embodiments, the trigger counter is configured to count up the continuous time. However, it is not limited to the foregoing. Specifically, the trigger counter may be configured to count down the continuous time from a predetermined suspended time (trigger threshold).

## Claims

1. A radio communication system including: a serving cell configured to transmit, to a radio terminal, an absolute grant for directly specifying an uplink user data transmission rate and a relative grant for relatively specifying the uplink user data transmission rate; and a non-serving cell configured to transmit the relative grant to the radio terminal without transmitting the absolute grant, wherein
the non-serving cell includes a controlling unit configured to control a transmission interval of a relative grant for instructing a decrease of the uplink user data transmission rate.

2. The radio communication system according to claim 1, wherein
the non-serving cell includes a guard counter configured to measure an elapsed time indicating a time elapsed since a transmission of the relative grant for instructing the decrease of the uplink user data transmission rate, and
the controlling unit regulates the transmission of the relative grant for instructing the decrease of the uplink user data transmission rate until the elapsed time reaches a predetermined non-transmission time.

3. The radio communication system according to claim 1, wherein the controlling unit controls the transmission interval in accordance with a priority class assigned to uplink user data.

4. The radio communication system according to claim 3, wherein the controlling unit controls the transmission interval for uplink user data having a first priority class to be longer than the transmission interval for uplink user data having a second priority class whose priority is lower than the first priority class.

5. The radio communication system according to claim 1, wherein
the non-serving cell includes a trigger counter configured to measure a continuous time for a state in which a reception power in the non-serving cell satisfies a predetermined condition, and
the controlling unit suspends the transmission of the relative grant for instructing the decrease of the uplink user data transmission rate until the continuous time reaches a predetermined suspended time.

6. The radio communication system according to claim 5, wherein the predetermined condition indicates that a reception power of data received from the radio terminal using an other cell as the serving cell is equal to or larger than a predetermined interference power.

7. The radio communication system according to claim 5, wherein the predetermined condition indicates that a difference between a received total wideband power in the non-serving cell and a target reception power is within a predetermined range.

8. A radio communication method including a serving cell configured to transmit, to a radio terminal, an absolute grant for directly specifying an uplink user data transmission rate and a relative grant for relatively specifying the uplink user data transmission rate; and a non-serving cell configured to transmit the relative grant to the radio terminal without transmitting the absolute grant, comprising:
controlling, at the non-serving cell, a transmission interval of the relative grant for instructing a decrease of the uplink user data transmission rate.

9. A base station provided in a radio communication system Including: a serving cell configured to transmit, to a radio terminal, an absolute grant for directly specifying an uplink user data transmission rate and a relative grant for relatively specifying the uplink user data transmission rate; and a non-serving cell configured to transmit the relative grant to the radio terminal without transmitting the absolute grant, wherein:
the base station includes the non-serving cell including a controlling unit configured to control a transmission interval of the relative grant for instructing a decrease of the uplink user data transmission rate.
